# EUROPÄISCHE PATENTSCHRIFT

(11) **EP 0 355 382 B1**
(45) Veröffentlichungstag und Bekanntmachung des Hinweises auf die Patenterteilung: **24.02.1993**
(21) Anmeldenummer: 89113001.5
(22) Anmeldetag: 15.07.1989
(51) Int. Cl.: F16H 59/06, F16H 59/70

(54) **Einstellvorrichtung für eine parameterabhängig Druckmitteldruck bereitstellende Ventilanordnung eines automatischen Kegelscheiben-Umschlingungs-Getriebes**
Adjusting device for a parametrically dependent hydraulic pressure valve arrangement for an automatic transmission of the belt and pulley type
Dispositif de réglage pour l'assemblage de soupape d'une transmission automatique à variateur à courroie trapézoidale fournissant une pression hydraulique dépendant d'un paramètre

(30) Priorität: 13.08.1988 DE 3827543
(43) Veröffentlichungstag der Anmeldung: 28.02.1990
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR); Ford Motor Company, Dearborn Michigan 48126 (US)
(72) Erfinder: Schmitt, Holm, D-5000 Köln 60 (DE); Röper, Hartmut, Dr., D-4019 Monheim (DE); Henken, Fritz, D-2815 Langwedel (DE); Heider, Peter, D-5350 Euskirchen (DE)
(74) Vertreter: Messulam, Alec Moses

(56) Entgegenhaltungen:
- EP-A- 0 172 740
- EP-A- 0 272 109
- EP-B- 0 158 370
- DE-A- 1 530 775
- DE-A- 2 857 335

## Beschreibung

Die Erfindung bezieht sich auf eine Einstellvorrichtung für eine parameterabhängig Druckmitteldruck bereitstellende Ventilanordnung eines automatischen Getriebes, der im Oberbegriff des Patentanspruches 1 erläuterten Art.

Aus der EP-A 172 740 ist eine gattungsgemäße Einstellvorrichtung für eine parameterabhängig Druckmitteldruck bereitstellende Ventilanordnung eines automatischen Kegelscheiben-Umschlingungs-Getriebes bekannt, bei dem eine die Scheibenstellung einer Kegelscheibe auf die Ventilanordnung übertragende Gestänge anordnung vorgesehen ist.

Bei dieser bekannten Einstellvorrichtung muß zur Einstellung einer veränderten Wirklage des Gestänges ein Teil der innerhalb des Getriebegehäuses bzw. des Ventilanordnungsgehäuses angeordneten Gestänge anordnung z.B. durch Abnehmen der Ölwanne des Ventilanordnungsgehäuses zugänglich gemacht werden.

Dadurch ist eine Veränderung der Wirklage des Gestänges bei im Betrieb befindlichem automatischen Getriebe nicht möglich, was zu wiederholten Einstellvorgängen nach entsprechender Überprüfung der Einstellung im Betrieb führt.

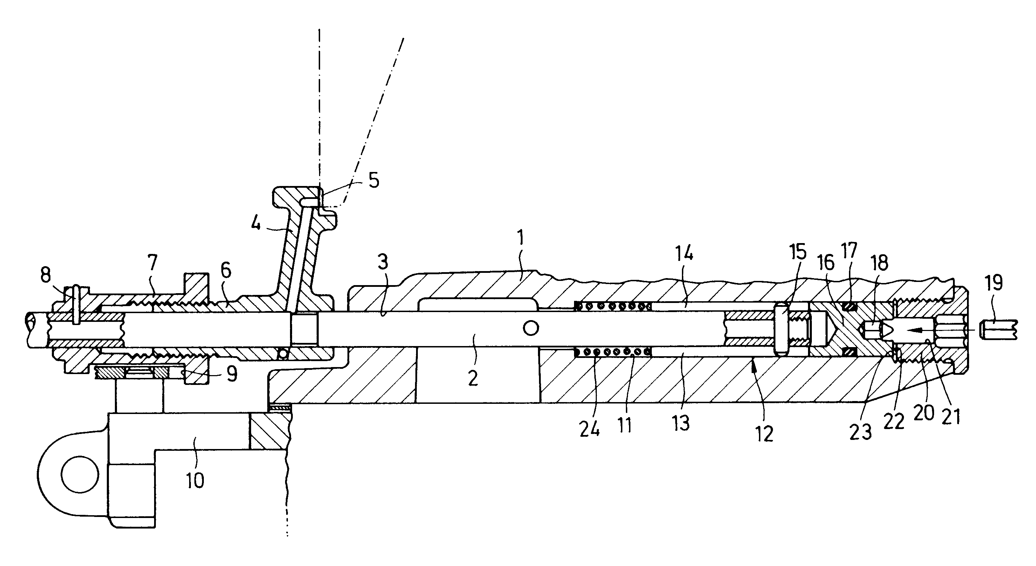

Aus der DE-A 15 30 775, Fig. 2 und Ansprüche, ist eine Einstellvorrichtung für eine parameterabhängig Druckmitteldruck bereitstellende Ventilanordnung eines automatischen Getriebes bekannt, bei der die Wirklage durch einen von außen einsteckbaren Schlüssel oder ein Werkzeug während des Betriebes des automatischen Getriebes veränderbar und einstellbar ist, so daß die Auswirkung der veränderten Einstellung auf die Funktion des Getriebes unmittelbar überprüft werden kann.

Das Problem der vorliegenden Erfindung besteht darin, eine Einstellvorrichtung der im Oberbegriff des Patentanspruches 1 erläuterten Art in der Weise zu verbessern, wie es aus der vorhergehend erwähnten Patentanmeldung aufgezeigt ist, wobei zusätzliche Maßnahmen getroffen werden müssen, daß die bei dem vorliegenden Gestänge im normalen Betrieb auftretenden ständigen axialen Lageveränderungen ohne Auswirkung auf die von außen zugängliche Einstellvorrichtung bleiben, d. h., daß die im Betrieb auftretenden axialen Bewegungen nicht zu einer unerwünschten Veränderung der Einstellung führen.

Gemäß der Erfindung wird dieses Problem gelöst, indem eine Einstellvorrichtung der im Oberbegriff des Patentanspruches 1 erläuterten Art die im Kennzeichenteil des Patentanspruches 1 aufgezeigten Merkmale aufweist.

Im Patentanspruch 2 ist eine zweckmäßige Sicherungsmaßnahme für die einmal erfolgte Einstellung vorgeschlagen.

Der die Scheibenstellung abnehmende Sensorfuß ist auf seiner axialen Führungsstange über eine Einstellbuchse verlagerbar. Die Einstellbuchse weist eine Gestängeanlage für das Gestänge auf und ist von außerhalb des Getriebegehäuses einstellbar. Die die Führungsstange aufnehmende Bohrung ist im Getriebegehäuse zu einer Aufnahmebohrung für eine Einstellhülse erweitert ist und nimmt die geschlitzte Einstellhülse auf, die über ihre Längsschlitze und einen Querstift mit der Führungsstange drehfest jedoch axial freibeweglich verbunden ist, an ihrem geschlossenen Ende über einen O-Ring abgedichtet ist und eine Aufnahme für ein von außen einsteckbares Werkzeug aufweist. Durch diese Anordnung wird eine Verdrehung der Führungsstange von außerhalb des Getriebegehäuses ermöglicht, wobei die Längsschlitze in der Einstellhülse die während des Betriebes auftretenden axialen Bewegungen der Führungsstange ungehindert zulassen.

Die Einstellhülse ist an ihrem inneren Ende über eine Feder axial nach außen vorgespannt, und ihre Aufnahmebohrung ist durch einen fest eingeschraubten Sicherungsstopfen verschlossen. Sowohl die Einstellhülse als auch der Sicherungsstopfen sind an ihren einander gegenüberliegenden Enden mit Stirnverzahnungen versehen. Eine Verstellung der Einstellhülse über das Werkzeug ist nur unter axialem Druck möglich, und nach Abziehen des Werkzeuges rastet die Stirnverzahnung der Einstellhülse in die Stirnverzahnung des Sicherungsstopfens ein und verhindert jegliche Veränderung der gewählten Einstellung durch die axialen Bewegungen der Führungsstange oder durch Vibrationen.

Die Erfindung wird anhand einer in der Zeichnung gezeigten Ausführungsform näher erläutert. Es zeigt:
Die Figur einen Schnitt durch eine Einstellvorrichtung im Bereich des die Scheibenstellung abnehmenden Sensorfußes mit seiner axialen Führungsstange und der gemäß der Erfindung im Bereich seiner Führungsstange angeordneten von außen zugänglichen Einstellvorrichtung und Sicherungseinrichtung.

In einem Getriebegehäuse 1 ist eine axiale Führungsstange 2 in einer Bohrung 3 axial verschiebbar angeordnet. Auf der Führungsstange 2 ist ein Sensorfuß 4 axial veränderbar angeordnet, der mit einer kreisbogenförmigen Anlagekante 5 in axialer Anlage am Außenumfang einer nur in Strich-Punkt-Linien angedeuteten Kegelscheibe steht und der mit seiner Nabe 6 über ein Außengewinde in Eingriff mit einem Innengewinde an einer Einstellbuchse 7 steht, die über einen Stift 8 drehfest mit der Führungsstange 2 verbunden ist. Die Einstellbuchse 7 weist eine Gestängeanlage 9 für ein Gestänge 10 auf, dessen anderes Ende in bekannter Weise auf eine Ventilanordnung einwirkt.

Die Bohrung 3 für die Führungstange 2 ist zu einer Aufnahmebohrung 11 erweitert, in der eine geschlitzte Einstellhülse 12 aufgenommen wird. Die Einstellhülse 12 weist zwei einander gegenüberliegende Längsschlitze 13 und 14 auf, über die sie über einen Querbolzen 15 drehfest mit der Führungsstange 2 jedoch axial freibeweglich verbunden ist. Die Einstellhülse 12 weist weiterhin ein geschlossenes Ende 16, das über einen O-Ring 17 abgedichtet ist, und eine Aufnahme 18 für ein von außen einsteckbares Werkzeug 19 auf.

Mit einer solchen Einstellvorrichtung wäre bereits unter Voraussetzung einer entsprechenden axialen Lagesicherung der Einstellhülse 12 eine Einstellung der Wirklage des Gestänges 10 von außen möglich.

Während des Betriebes des Getriebes führt jedoch der Sensorfuß 4 mit seiner axialen Führungsstange 2 ständige axiale Bewegungen aus, die in Verbindung mit auftretenden Schwingungen und Vibrationen zu einem ungewünschten Verstellen der eingestellten Wirklage führen könnten.

Daher ist die erweiterte Aufnahmebohrung 11 außen durch einen fest eingeschraubten Sicherungsstopfen 20 verschlossen, der eine Durchtrittsöffnung 21 für das Werkzeug 19 aufweist und der an seinem inneren Ende mit einer Stirnverzahnung 22 versehen ist. In ähnlicher Weise ist das äußere Ende der Einstellhülse 12 mit einer Stirnverzahnung 23 versehen und die Einstellhülse 12 wird über eine an ihrem inneren Ende angreifende Schraubenfeder 24 axial nach außen vorgespannt.

Zum Betätigen der Einstellvorrichtung muß bei dieser Ausführungsform das Werkzeug 19 durch den Sicherungsstopfen 20 eingeführt und soweit axial belastet werden, daß die miteinander in Eingriff stehenden Stirnverzahnungen 22 und 23 ausrasten. Nun ist ein Verdrehen der Einstellhülse 12 möglich, wodurch die relative Lage des Sensorfußes 4 gegenüber der Gestängeanlage 9 des Gestänges 10 verändert werden kann. Sobald das Werkzeug 19 gezogen wird, drückt die Schraubenfeder 24 die Einstellhülse 12 mit ihrer Stirnverzahnung 23 wieder in Eingriff mit der Stirnverzahnung 22 am Sicherungsstopfen 20 und die eingestellte Wirklage wird damit gegen eine ungewollte Veränderung festgelegt.

## Patentansprüche

1. Einstellvorrichtung für eine parameterabhängig Druckmitteldruck bereitstellende Ventilanordnung eines automatischen Kegelscheiben-Umschlingungsgetriebes, bei dem eine die Scheibenstellung einer Kegelscheibe auf die Ventilanordnung übertragende Gestängeanordnung vorgesehen ist, welche einen die Scheibenstellung abnehmenden, in Anlage gegen den Umfang der Kegelscheibe gehaltenen und auf einer axialen Führungsstange (2) des Getriebegehäuses angeordneten Sensorfuß (4) sowie ein mit diesem gekoppeltes zu der Ventilanordnung führendes Gestänge (10) aufweist, wobei die Wirklage des Sensorfußes an der Kegelscheibe bezüglich der Ventilanordnung durch ein Einstellgewinde innerhalb der Gestängeanordnung festlegbar ist,
**dadurch gekennzeichnet,** daß
- der Sensorfuß (4) auf seiner axial beweglichen Führungsstange (2) über eine Einstellbuchse (7) verlagerbar ist, welche eine Gestängeanlage (9) für das Gestänge (10) aufweist und welche von außerhalb des Getriebegehäuses einstellbar ist, wobei eine die Führungsstange aufnehmende Bohrung (3) im Getriebegehäuse zu einer Aufnahmebohrung (11) für eine Einstellhülse (12) erweitert ist, welche über Längsschlitze (13 und 14) und einem Querstift (15) mit der Führungsstange (2) drehfest und axial frei beweglich verbunden und an ihrem geschlossenen Ende (16) über einen O-Ring (17) abgedichtet ist und eine Aufnahme (18) für ein von außen einsetzbares Werkzeug aufweist.

2. Einstellvorrichtung nach Anspruch 1,
**dadurch gekennzeichnet,** daß
- die erweiterte Aufnahmebohrung (11) an ihrem äußeren Ende durch einen fest eingeschraubten Sicherungsstopfen (20) verschlossen ist, der eine Durchtrittsöffnung (21) für das Werkzeug (19) aufweist und an seinem inneren Ende mit einer Stirnverzahnung (22) versehen ist und
- das äußere Ende der Einstellhülse (12) gleichfalls mit einer Stirnverzahnung (23) versehen ist und die Einstellhülse (12) über eine an ihrem inneren Ende angreifende Feder (24) axial nach außen vorgespannt ist.

## Claims

1. Adjusting device for a valve arrangement providing a pressure medium pressure, as a function of parameters, in an automatic cone pulley belt transmission, in which a rod arrangement is provided to transmit the position of a cone pulley to the valve arrangement and is equipped with a sensor foot (4) which detects the pulley position, is held in contact with the periphery of the cone pulley and is disposed on an axial guide rod (2) of the transmission casing, and with a rod (10) coupled to said foot and leading to the valve arrrangement, the operative position of the sensor foot on the cone pulley in relation to the valve arrangement being able to be fixed by an adjusting screw thread inside the rod arrangement, characterised in that
- the sensor foot (4) is displaceable on its axially movable guide rod (2) by means of an adjusting bush (7) which has a support (9) for the rod (10) and is adjustable from outside the transmission casing, while a bore (3) holding the guide rod is widened in the transmission casing to form a retaining bore (11) for an adjusting sleeve (12) which is joined by means of longitudinal slots (13 and 14) and a cross pin (15) in a rotationally fixed manner to the guide rod (2) but to be freely movable axially and which is sealed by means of an O-ring (17) at its closed end (16) and has a support (18) for a tool which can be inserted from the outside.

2. Adjusting device according to Claim 1, characterised in that
- the widened retaining bore (11) is closed at its outer end by a firmly screwed-in securing stopper (20) which has an opening (21) for the passage of the tool (19) and is provided at its inner end with spur teeth (22) and
- the outer end of the adjusting sleeve (12) is likewise provided with spur teeth (23), and the adjusting sleeve (12) is prestressed axially outwards by means of a spring (24) acting on its inner end.

## Revendications

1. Dispositif de réglage pour un bloc de distribution délivrant, en fonction de paramètres, une pression au fluide pressurisé d'une transmission automatique à enlacement par disques tronconiques, dans laquelle est prévu un système à tringlerie qui répercute la position d'un disque tronconique sur le bloc de distribution, et comporte un patin détecteur (4) maintenu en contact contre le pourtour du disque tronconique, détectant la position du disque et implanté sur une tige axiale de guidage (2) du carter de la transmission, ainsi qu'une tringlerie (10) accouplée audit patin et rattachée au bloc de distribution, la position efficace du patin détecteur sur le disque tronconique pouvant être fermement arrêtée, par rapport au bloc de distribution, par l'intermédiaire d'un filetage de réglage à l'intérieur du système à tringlerie, caractérisé par le fait que
- le patin détecteur (4) peut être déplacé, sur sa tige de guidage (2) mobile axialement, par l'intermédiaire d'une douille de réglage (7) qui présente une zone de contact (9) pour la tringlerie (10) et peut être ajustée depuis l'extérieur du carter de la transmission, un alésage (3), pratiqué dans le carter de la transmission et recevant la tige de guidage, étant élargi pour former un logement alésé (11) destiné à un fourreau de réglage (12) qui, par l'entremise de fentes longitudinales (13 et 14) et d'un tenon transversal (15), est relié à la tige de guidage (2) avec assujettissement rotatif et avec libre mobilité axiale, est rendu étanche à son extrémité fermée (16), au moyen d'un joint torique (17), et est muni d'un logement (18) pour un outil insérable de l'extérieur.

2. Dispositif de réglage selon la revendication 1, caractérisé par le fait que
- le logement alésé élargi (11) est obturé, à son extrémité externe, par l'intermédiaire d'un bouchon d'arrêt (20) bloqué à demeure par vissage, présentant un orifice (21) de passage de l'outil (19), et pourvu d'une denture frontale (22) à son extrémité interne ; et
- l'extrémité externe du fourreau de réglage (12) est elle aussi pourvue d'une denture frontale (23), et ledit fourreau de réglage (12) est précontraint vers l'extérieur, dans le sens axial, par un ressort (24) venant en prise avec son extrémité interne.
